# EUROPÄISCHE PATENTSCHRIFT

(11) **EP 1 872 026 B1**
(45) Veröffentlichungstag und Bekanntmachung des Hinweises auf die Patenterteilung: **03.12.2008**
(21) Anmeldenummer: 06722808.0
(22) Anmeldetag: 19.04.2006
(51) Int. Cl.: F16D 65/56, F16D 55/224

(54) **RADBREMSE**
WHEEL BRAKE
FREIN DE ROUE

(30) Priorität: 20.04.2005 DE 102005018157; 20.02.2006 DE 102006007684
(43) Veröffentlichungstag der Anmeldung: 02.01.2008
(73) Patentinhaber: BPW Bergische Achsen KG, 51674 Wiehl (DE)
(72) Erfinder: DOWE, Günter, 51588 Nümbrecht (DE); ABT, Christian, 51643 Gummersbach (DE); PEHLE, Michael, 51371 Leverkusen (DE)
(74) Vertreter: Christophersen, Ulrich Rudolf
(86) Internationale Anmeldenummer: PCT/DE2006/000689
(87) Internationale Veröffentlichungsnummer: WO 2006/111149

(56) Entgegenhaltungen:
- EP-A- 0 995 921
- US-A1- 2003 173 164
- US-B1- 6 311 809

## Beschreibung

Die Erfindung betrifft eine Radbremse nach dem Oberbegriff des Patentanspruchs 1.

In einer Vielzahl von Publikationen sind bereits Scheibenbremsen beschrieben, die zusätlich zu der Brems-Zuspanneinrichtung mit einer Nachstelleinrichtung zum Ausgleich von Bremsbelag- und/oder Bremsscheibenverschleiß durch Verstellen des Abstandes zwischen Bremsbelag und Bremsscheibe versehen sind.

Eine Scheibenbremse mit einer rein mechanisch arbeitenden Nachstellvorrichtung ist aus der DE 29 25 342 A1 bekannt. Zum Betätigen der Bremse wird ein Druckstempel mitsamt einer eine äußere Schrägverzahnung aufweisenden Mutter und einem Druckstück über eine Zuspanneinrichtung mit Druck beaufschlagt, wodurch Druckstempel, Mutter und Druckstück gemeinsam in Richtung des Bremsbelags bewegt werden. Die zugehörige Nachstellvorrichtung erstreckt sich quer zur Verschiebungsrichtung des Druckstempels. Wesentlicher Bestandteil der Nachstellvorrichtung ist eine Nachstellwelle, die auf ihrem Umfang mit einer Schrägverzahnung versehen ist, die mit der auf dem Umfang der Mutter ausgebildeten Schrägverzahnung korrespondiert. Über die beiden korrespondierenden Schrägverzahnungen sowie weitere, ebenfalls quer zur Verschiebungsrichtung des Druckstempels angeordnete Bauteile der Nachstellvorrichtung, wie etwa eine Buchse, eine Mutter, eine Spiralfeder usw., wird der eigentliche Nachstelleffekt bewirkt. Die Radbremse weist eine vergleichsweise raumgreifende Bauweise auf.

Eine Radbremse gemäß dem Oberbegriff des Anspruchs 1 geht z.B aus US-B-6 311 809 hervor.

für Fahrzeugräder mit einer integrierten Nachstelleinrichtung Um eine Radbremse für Fahrzeugräder mit einer integrierten Nachstelleinrichtung zu schaffen, die sich durch eine kompakte Bauweise auszeichnet, wird erfindungsgemäß eine Radbremse mit den in Patentanspruch 1 angegebenen Merkmalen vorgeschlagen.

Bei einer solchen Radbremse und insbesondere Scheibenbremse arbeitet die integrierte Nachstelleinrichtung mechanisch und unabhängig von den fahrzeugeigenen Energie- und Signalsystemen, und sie zeichnet sich durch eine vergleichsweise kompakte Bauweise aus.

Für die kompakte Bauweise der Radbremse ist es von Vorteil, daß der Druckstempel ein Doppelstempel ist, dessen beiden Einzelstempel über ein Joch starr miteinander verbunden sind, in dessen Mitte sich die Schraubverbindung mit dem Nachstellelement befindet.

Um nach einem Austausch der alten, verschlissenen Bremsbeläge eine Rückstellung der integrierten Nachstelleinrichtung zu ermöglichen, kann das Nachstellelement mit einer Verzahnung versehen sein.

Die Verzahnung wiederum kann so ausgebildet sein, dass sie mit der Verzahnung eines neben dem Nachstellelement angeordneten Zahnrades kämmt. An diesem Zahnrad können sich dann Eingriffsmittel zur Rückstellung des Nachstellelementes befinden. Vorzugsweise ist das Zahnrad an einer seitlichen Erweiterung des ersten Druckelements drehbar gelagert.

Nachfolgend werden verschiedene Ausführungsformen der Radbremse unter Bezugnahme auf die Zeichnungen erläutert. Darin zeigen:
- Fig. 1: einen Schnitt durch den Bremssattel einer Scheibenbremse einschließlich der Bremsscheibe und der Bremsbeläge;
- Fig. 2: in einer lediglich schematischen Darstellung (die in etwa der Schnittebene II-II in Fig. 1 entspricht) den prinzipiellen Aufbau einer Nachstelleinrichtung;
- Fig.3: in verschiedenen Stadien (Fign. 3a bis 3e) das Prinzip der Nachstelleinrichtung;
- Fig. 4: eine weitere Ausführung einer erfindungsgemäßen Nachstelleinrichtung;
- Fig. 5: eine teilweise Schnittdarstellung entlang der Schnittebene V - V in Fig. 4;
- Fig. 5a: eine stark vergrößert dargestellte Einzelheit aus Fig. 5;
- Fig. 6: eine Schnittdarstellung entlang der Schnittebene VI - VI in Fig. 5;
- Fig. 7: eine Explosionsansicht der Einzelteile der Nachstelleinrichtung aus Fig. 5;
- Fig. 8: eine weitere Ausführung einer erfindungsgemäßen Nachstelleinrichtung;
- Fig. 9: eine vergrößert dargestellte Einzelheit aus Fig. 8 ;
- Fig. 10: eine Explosionsansicht einiger Einzelteile der Nachstelleinrichtung aus Fig.
- Fig. 11: einen Schnitt durch den Bremssattel einer weiteren Ausführungsform einer Scheibenbremse;
- Fig. 12: eine vergrößert dargestellte Einzelheit der Fig. 11 und
- Fig. 13: eine stark vergrößert dargestellte weitere Einzelheit der Fig. 11.

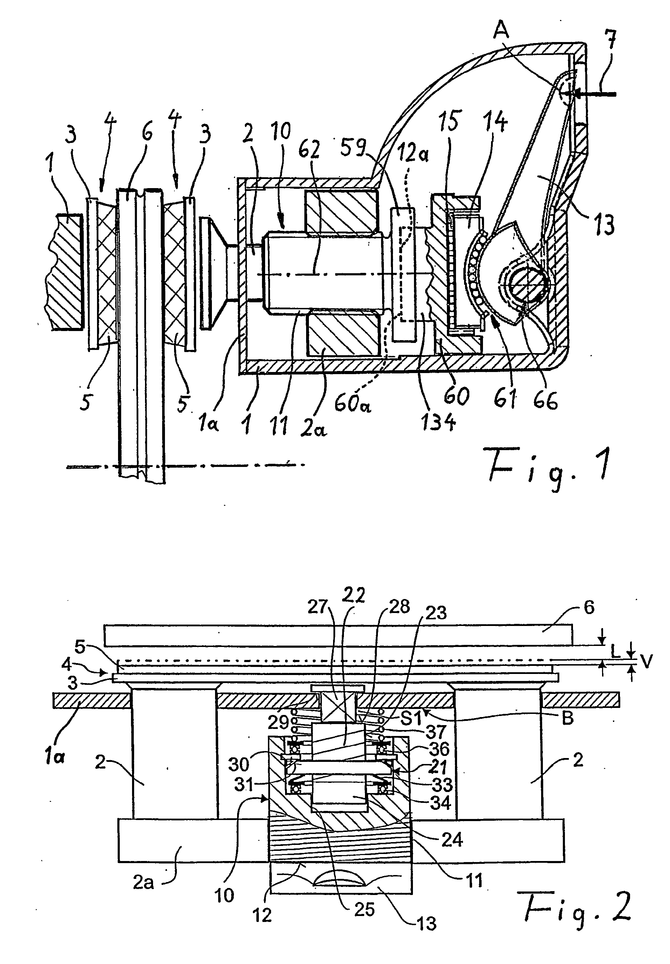

Fig. 1 zeigt in vereinfachter Darstellung einen Teil des Bremsgehäuses 1, 1a einer Fahrzeug-Scheibenbremse, vorzugsweise des Schwimmsattel-Bautyps. Zwei Druckstempel 2 sind innerhalb des Bremsgehäuses 1 über ein quer zu den Druckstempeln verlaufendes Joch 2a miteinander verbunden. Die beiden Druckstempel 2 bilden daher, wie stark schematisch die Fig. 2 erkennen läßt, einen Doppelstempel, der sich außerhalb des Bremsgehäuses 1 gegen die Rückseite der Belagplatte 3 des Bremsbelags 4 abstützt. Von dem Bremsbelag 4 ist in den Fign. 1 und 2 außerdem jeweils der Reibbelag 5 dargestellt, sowie ferner die Bremsscheibe 6 der Scheibenbremse.

Die im Betrieb mit einem Lüftspiel L (Fig. 2) auf beiden Seiten der Bremsscheibe 6 arbeitende Scheibenbremse ist mit einer nachfolgend noch näher erläuterten, rein mechanisch arbeitenden Nachstelleinrichtung versehen sein. Diese ist so konstruiert, dass sie, obwohl nur einmal vorhanden, beide Druckstempel 2 nachstellt.

Zur Übertragung der von einem Bremszylinder und vorzugsweise einem druckluftbetätigten Bremszylinder erzeugten Zuspannkraft ist in dem Bremsgehäuse 1 ein Zuspannhebel 13 verschwenkbar gelagert. Am freien Hebelende bei A kann sich die schematisch dargestellte Betätigungsstange 7 des Bremszylinders abstützen. Wird dieser mit Druckluft beaufschlagt, verschwenkt der Hebel 13 um seine gehäusefeste Lagerung 66. Hierbei kommt es über zwischengeschaltete Druckelemente 60, 59 und das die Druckstempel in Axialrichtung starr miteinander verbindende Joch 2a zu einem gleichzeitigen Verschieben beider Druckstempel 2 in Richtung Bremsscheibe 6. Einzelheiten der Lagerung und Abstützung des Zuspannhebels 13 sowie des Aufbaus der Zuspannvorrichtung werden nachfolgend noch näher erläutert werden.

Entsprechend der stark prinzipiell gehaltenen Fig. 2 ist der doppelte Druckstempel 2 in der Mitte seines Joches 2a mit einem Innengewinde versehen, welches zusammen mit einem Außengewinde eines Nachstellelementes 10 eine Schraubverbindung 11 zwischen dem Nachstellelement 10 und den Druckstempeln 2 bildet. Das auf diese Weise besonders platzsparend in der Mitte zwischen den starren Druckstempeln 2 angeordnete Nachstellelement 10 ist topfförmig gestaltet und enthält in seinem Inneren die Einzelelemente der Nachstellvorrichtung.

Die Zuspanneinrichtung kann z.B. druckluftbetätigt sein, wodurch der Zuspannhebel 13 über zwischengeschaltete Bauteile eine Kraft auf das Nachstellelement 10 ausübt. Vom Nachstellelement 10 erfolgt die Weiterleitung der Zuspannkraft über die Schraubverbindung 11 gleichmäßig auf beide Druckstempel 2, und bewirkt so die Zustellbewegung des Bremsbelags 4 gegenüber der Bremsscheibe 6.

Der Zuspannhebel 13 stützt sich über ein schalenförmiges Gelenk 61 drehbeweglich an einer Kulisse 14 ab. Die Drehachse des Schalengelenks 61 erstreckt sich parallel, jedoch versetzt zur Drehachse der gehäusefesten Lagerung 66, und ebenso erstreckt sich auch das Joch 2a parallel zu diesen beiden Drehachsen.

Die Kulisse 14 wiederum stützt sich über ein Flachlager 15 in einem Druckelement 60 ab. Nach unten und nach oben hat die flache Kulisse 14 Spiel in Bezug auf das Druckelement 60, um so seitliche Bewegungen zu ermöglichen.

Das Druckelement 60 ist so in dem Gehäuse 1 angeordnet, dass es in Bezug auf das Gehäuse 1 nicht drehbar ist. Zu diesem Zweck kann sich das Druckelement 60 von innen an einer Führung des Gehäuses 1 abstützen.

Der Bremsscheibe 6 zugewandt ist das Druckstück 60 mit einem Zentrieransatz 134 versehen. Dieser ist hier zylindrisch, und stützt sich mit seiner stirnseitigen Druckfläche 60a an einer runden Gegendruckfläche 12a ab, die in Gestalt einer runden Einsenkung an dem Nachstellelement 10 ausgebildet ist. Im Betrieb kann sich daher das Nachstellelement 10 gegenüber dem Druckelement 60 um die Mittellinie 62 drehen. Zur Reduzierung der bei dieser Drehbewegung auftretenden Reibung kann zwischen der Druckfläche 60a und der Gegendruckfläche 12a eine flache Scheibe aus Teflon^{®} als Gleitlager angeordnet sein.

Anhand der Fig. 2 wird im folgenden das Arbeitsprinzip der integrierten Nachstelleinrichtung erläutert, zu der das Nachstellelement 10 ein wichtiger Bestandteil ist. Weitere Bestandteile der Nachstelleinrichtung sind ein nach Art eines Gewindebolzens gestaltetes Gewindeelement 22 sowie ein nach Art einer Gewindemutter gestaltetes Gewindeelement 21. Das Innengewinde des Gewindeelementes 21 greift in das entsprechend gestaltete Außengewinde des weiteren Gewindeelementes 22. Die so gebildete Verschraubung 23 zwischen den beiden Gewindeelementen 21, 22 weist, wie die Zeichnung erkennen läßt, eine relativ große Steigung auf. Diese Steigung ist insbesondere deutlich größer, als die Gewindesteigung der gleichsinnig ausgebildeten Schraubverbindung 11 zwischen dem topfförmigen Nachstellelement 10 und den Druckstempeln 2. Die Verschraubung 23 ist ferner äußerst reibungsarm gestaltet.

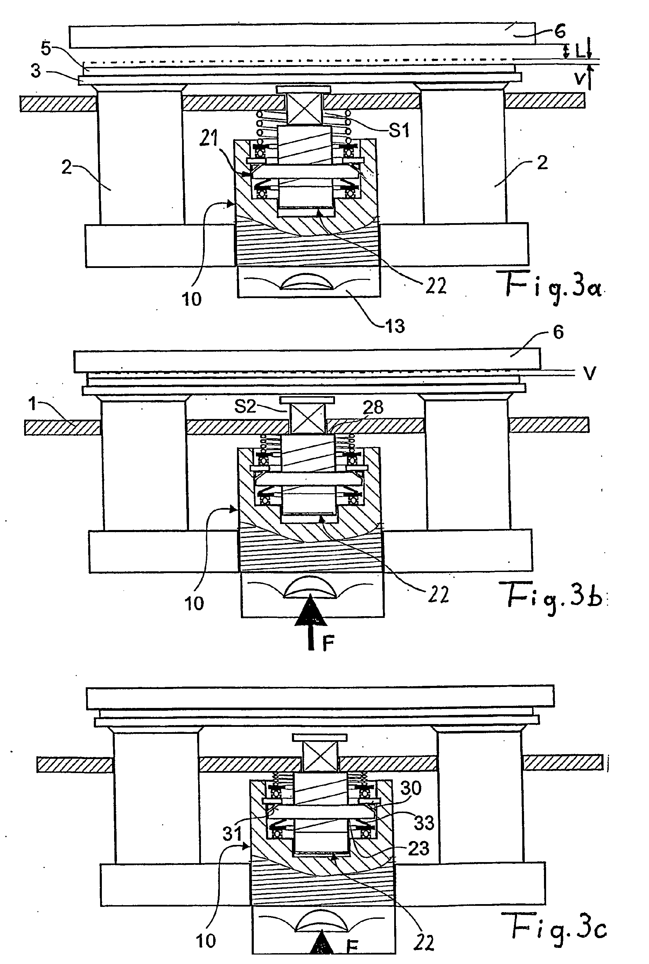

Das bolzenartige Gewindeelement 22 ist im Bereich seines rückwärtigen Endes mit einem zylindrischen Abschnitt 24 versehen, welcher in einer entsprechend dimensionierten Bohrung 25 des Nachstellelementes 10 geführt ist. An seinem anderen, dem Bremsbelag 4 zugewandten Ende ist das Gewindeelement 22 mit einer Verdrehsicherung versehen sowie ferner mit Mitteln, welche den axialen Weg des Gewindeelementes 22 begrenzen. Zur Verdrehsicherung ist dieses Ende des Gewindeelementes 22 mit einem Vierkant 27 versehen, welcher durch eine entsprechende vierkantige Öffnung im Deckel 1a des Bremsgehäuses 1 ragt, und dort zwar eine axiale Beweglichkeit, jedoch keine Verdrehung zuläßt. Zur Begrenzung der Beweglichkeit des Gewindeelementes 22 sind daran sowie entsprechend an dem feststehenden Deckel 1a des Bremsgehäuses 1 ein erster Endanschlag 28 und ein zweiter Endanschlag 29 ausgebildet. Entsprechend ergeben sich ein erster Spalt S1 und ein zweiter Spalt S2 (Fig. 3b). Bewegt sich das erste Gewindeelement 22 in Richtung auf den Bremsbelag 4, so verringert sich der erste Axialspalt S1, bis der erste Endanschlag 28 erreicht ist. Entfernt sich umgekehrt das Gewindeelement 22 von dem Bremsbelag 4, wird der zweite Axialspalt S2 überwunden, bis der zweite Endanschlag 29 diese Axialbewegung begrenzt.

Das andere, nach Art einer Gewindemutter gestaltete Gewindeelement 21 ist, dem Bremsbelag 4 zugewandt, mit einer Druckfläche 30 einer Reibkupplung versehen. Mit der als Kupplung dienenden Druckfläche 30 vermag sich das Gewindeelement 21 an einer als Gegenkupplung dienenden Gegendruckfläche 31 des Nachstellelements 10 reibschlüssig abzustützen. Beim Ausführungsbeispiel sind Druckfläche sowie Gegendruckfläche ringförmig und, zwecks Erhöhung der Reibung an den Kupplungsflächen 30 und 31, leicht konisch gestaltet.

Auf der anderen, d.h. dem Bremsbelag 4 abgewandten Seite, stützt sich eine Druckfeder 33 gegen das Gewindeelement 21. Beim Ausführungsbeispiel ist diese Druckfeder 33 eine das Gewindeelement 22 ringförmig umgebende Tellerfeder. Diese stützt sich wiederum mit ihrem anderen Ende an einem Axiallager 34 ab, welches sich seinerseits an dem Nachstellelement 10 abstützt. Bei dem hier dargestellten Ausführungsbeispiel ist das Axiallager 34 ein Wälzlager.

Ein zweites Axiallager 36 in Gestalt eines Wälzlagers stützt sich an dem Nachstellelement 10 ab und wird andererseits durch eine Druckfeder 37 beaufschlagt, die sich mit ihrem anderen Ende gegen das Bremsgehäuse 1 abstützt. Die Feder 37 ist beim Ausführungsbeispiel eine das Gewindeelement 22 umgebende Schraubenfeder. Dadurch, daß die Feder 37 nur unter Zwischenlage des Axiallagers 36 auf das Nachstellelement 10 einwirkt, ergibt sich eine dauernde, jedoch in Drehrichtung nahezu reibungsfreie Axialkraft auf das Nachstellelement, wodurch dessen funktionssichere Rückstellung sicher gestellt wird.

Ebenso führt auch die Abstützung der anderen Druckfeder 33 an dem dortigen Axiallager 34 zu einer dauernden Axialkraft auf das Gewindeelement 21, wobei auch diese Axialkraft in Drehrichtung nahezu reibungsfrei ist. Groß ist hingegen die Reibung der von der Druckfläche 30 und der Gegendruckfläche 31 gebildeten Reibkupplung, solange sich das Gewindeelement 21 gegen das Nachstellelement 10 abstützt. Die Druckfläche 30 und die Gegendruckfläche 31 sind somit Bestandteile eines Kupplungsmechanismus, der eine Verbindung zwischen dem Außengewinde des Nachstellelements 10 und dem Innengewinde des Gewindeelements 21 herzustellen vermag bzw. beide Bauteile zu einer Einheit zusammenfügt, wobei diese Verbindung andererseits auch wieder aufgehoben werden kann, so daß beide Bauteile gegeneinander drehbar sind. Die Gewindeelemente 21, 22 sind konzentrisch zu dem Nachstellelement 10 angeordnet, was zu einer kompakten, in den Druckstempel 2 integrierten Bauweise führt.

Anhand der Fign. 3a bis 3e wird im folgenden die Funktion der Nachstelleinrichtung erläutert.

Fig. 3a zeigt den Ruhezustand der Bremse nach einer Betätigung, bei der sich der Bremsbelagverschleiß V eingestellt hat, weshalb beim nächsten Bremsvorgang eine zumindest teilweise Nachstellung erfolgen soll. Der Abstand zwischen dem Reibbelag 5 und der Bremsscheibe 6 ergibt sich dabei durch die Summe der Maße des gewünschten Lüftspiels L und des zu kompensierenden Verschleißes V.

Unter der Wirkung der Zuspannkraft F wird bei Beginn des Bremsvorgangs gemäß Fig. 3b das Nachstellelement 10 mitsamt den beiden Gewindeelementen 21, 22 sowie den Druckstempeln 2 in Richtung auf die Bremsscheibe 6 und entgegen der Kraft der Feder 37 verschoben, bis der Endanschlag 28 des ersten Gewindeelements 22 an dem Bremsgehäuse 1 anliegt. Diese Position ist in Fig. 3b dargestellt. Wie Fig. 3b zu entnehmen ist, hat der erste Axialspalt in dieser Position die Größe Null erreicht, wohingegen der zweite Axialspalt S2 sein Maximum erreicht hat.

Wird gemäß Fig. 3c das Nachstellelement 10 nun zur Überwindung des Verschleißes V weiterhin mit der Zuspannkraft F beaufschlagt, so verschiebt es sich relativ zu dem nunmehr axial blockierten ersten Gewindeelement 22, bei gleichzeitiger Annäherung der Druckstempel 2 an die Belagplatte 3. Das Gewindeelement 21 hebt dabei aufgrund seiner Verbindung mit dem weiteren Gewindeelement 22 von der Gegendruckfläche 31 des Nachstellelementes 10 ab. Durch die Wirkung der Feder 33 und aufgrund der großen Gewindesteigung der Verschraubung 23 wird das Gewindeelement 21 gegenüber dem feststehenden Gewindeelement 22 leichtgängig im Uhrzeigersinn verdreht, so daß es sich, getrieben von der Feder 33, wieder gegen die Gegendruckfläche 31 des Nachstellelements 10 schraubt. Das Gewindeelement 21 macht im angehobenen Zustand die gleiche Axialbewegung wie das Nachstellelement 10, bis der Bremsbelag 4 nach Überwindung des Verschleißes V in Anlage an der Bremsscheibe 6 gelangt. Diese Position ist in Fig. 3c dargestellt. Am Ende des Zuspannens wird die Kupplungsfläche 31 des Nachstellelements 10 über die erste Druckfeder 33 wieder fest auf die Kupplungsfläche 30 des zweiten Gewindeelementes 21 gedrückt, weshalb Gewindeelement 21 und Nachstellelement 10 wieder einkuppeln.

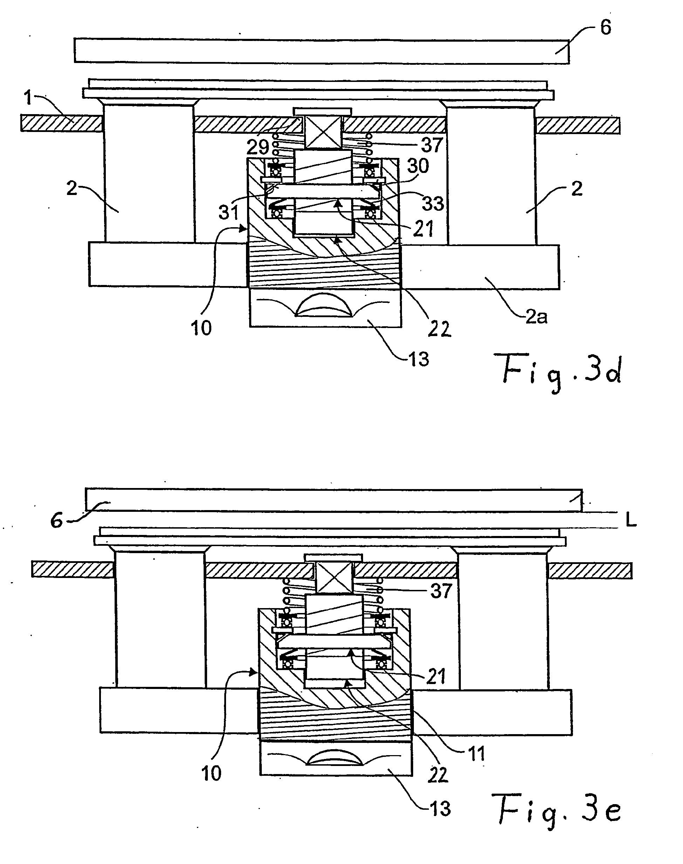

Mit Beendigung des Bremsvorgangs entfällt die Zuspannkraft F, Fig. 3d. Durch die Kraft der Druckfeder 37 wird zunächst die gesamte Nachstelleinrichtung mitsamt den Druckstempeln 2 zurückgeschoben, bis das Gewindeelement 22 mit seinem Anschlag 29 an das den Fixpunkt bildende Bremsgehäuse 1 stößt. Das Gewindeelement 22 ist von diesem Zeitpunkt an gegen eine weitere Zurückbewegung blockiert.

Bei der weiteren Zurückbewegung des Nachstellelementes 10 gemäß Fig. 3e ist die Kraft der Druckfeder 37 ausreichend dimensioniert, um dann das Gewindeelement 21 und das Nachstellelement 10 als Einheit und entgegen dem Uhrzeigersinn relativ zu dem axial blockierten Gewindeelement 22 zu verdrehen, Fig. 3e. Durch die Schraubverbindung 11 wird gleichzeitig mit dem Drehen des Nachstellelementes 10 das Joch 2a mit den beiden Druckstempeln 2 bewegt bzw. nachgestellt, und zwar in Richtung auf die Bremsscheibe 6.

Durch die begrenzte Beweglichkeit des Gewindeelementes 22 zwischen dessen erstem Endanschlag 28 und seinem zweiten Endanschlag 29 kann daher das gewünschte Lüftspiel zwischen den Bremsbelägen 4 und der Bremsscheibe 6 eingestellt werden bzw. wird dieses im Betrieb der Scheibenbremse laufend nachgestellt. Die Anordnung der beiden als Fixpunkte dienenden Anschläge 28, 29 ist beim Ausführungsbeispiel in einem Bereich B des Bremsgehäuses 1 (vergleiche Fig. 2), der sich zwischen dem Bremsbelag und der Nachstelleinrichtung befindet. Denn in diesem Bereich B ist das Bremsgehäuse weitgehend frei von Gehäuseverformungen infolge der Bremskräfte. Solche in der Praxis kaum vermeidbaren Verformungen sind daher ohne Einfluß auf die Genauigkeit der Nachstellung. Auch auf der anderen Seite der Bremsscheibe 6 muss das dortige Lüftspiel durch die beschriebene Nachstellung überwunden werden, da auch der dortige Bremsbelag einem Verschleiß unterliegt.

Durch das Verhältnis der Gewindesteigung der Schraubverbindung 11 und jener der Schraubverbindung 23 wird vorgegeben, inwieweit bei einem Bremsvorgang das Verschleißmaß kompensiert wird bzw. wie weit die Druckstempel 2 relativ gegenüber dem Nachstellelement 10 in Richtung der Bremsscheibe 6 verstellt werden. Zum Beispiel kann die Nachstellung eines sich einstellenden Verschleißes . V über mehrere Bremsvorgänge verteilt nachgestellt werden.

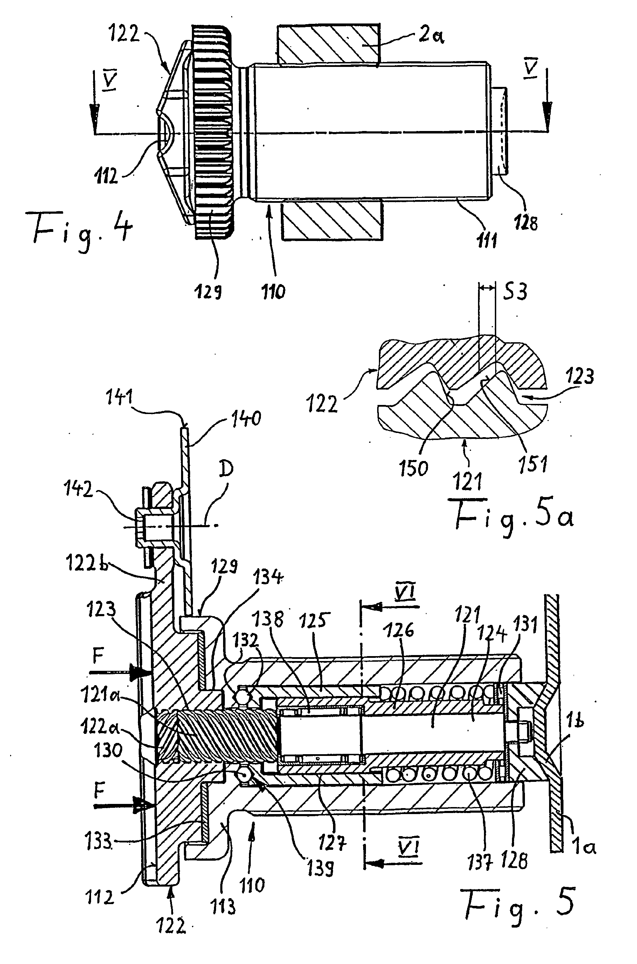

Eine weitere Ausführungsform einer Nachstelleinrichtung für eine Scheibenbremse wird nachfolgend anhand der Figuren 4 bis 7 erläutert. Für die Erläuterung dieser Ausführungsform ist insbesondere Fig. 5a mit den im Gewinde realisierten Endanschlägen nochmals von Bedeutung.

Fig. 4 zeigt schematisch das die beiden Druckstempel starr miteinander verbindende Joch 2a, welches wiederum nach Art einer Traverse gestaltet ist, und sich in der Darstellung der Fig. 4 aus der Zeichenebene hinaus bzw. in diese hinein erstreckt. Das Nachstellelement 110 ist von der Seite her betrachtet von in etwa pilzförmiger Gestalt und weist auf einem Großteil seiner Länge ein Außengewinde auf, das gemeinsam mit dem korrespondierenden Innengewinde der Traverse bzw. des Jochs 2a die Schraubverbindung 111 bildet. Am zuspannseitigen Ende weist die Nachstelleinrichtung ein Gewindeelement 122 auf, welches das Druckelement darstellt. Daran ist eine muldenförmige Druckfläche 112 ausgebildet, also eine in etwa halbzylindrische Ausnehmung, die sich parallel zum Joch 2a erstreckt und an der sich der Zuspannhebel, etwa ein Zuspannhebel wie in Fig. 1 dargestellt, drehbeweglich abstützt. Auf diese Weise wird die Zuspannkraft F auf das als Druckplatte gestaltete Gewindeelement 122 übertragen. Fig. 4 lässt ferner erkennen, dass das Nachstellelement 110 zum Zwecke der Rückstellung der Nachstelleinrichtung mit einer Außenverzahnung 129 versehen ist. Auf deren Funktion wird später noch eingegangen werden.

Fig. 5 zeigt in Verbindung mit Fig. 5a im Schnitt die wesentlichen Elemente der Nachstelleinrichtung, nämlich das Nachstellelement 110 selbst, das erste Gewindeelement 121, das weitere Gewindeelement 122, zwei Hülsen 125, 126, eine Einwegkupplung 138 und eine Drehmomentkupplung 139. Zusätzlich dargestellt ist ein der Rückstellung beim Bremsbelagwechsel dienendes Zahnrad 140. Diese Teile sind in Fig. 5 geschnitten gezeichnet. Nicht geschnitten eingezeichnet ist lediglich das als zentraler Gewindebolzen gestaltete erste Gewindeelement 121. Dieses ist mit seinem einen Ende derart gegenüber einem Deckel 1a des Bremssattels oder Bremsgehäuses festgelegt, dass sich das erste Gewindeelement 121 zwar in axialer Richtung nicht bewegt, es aber um seine eigene Achse drehbar ist. Der Deckel 1a des Bremsgehäuses 1 ist dort wo sich das bolzenförmige Gewindeelement 121 abstützt, mit einer den notwendigen Formschluß bietenden Prägung 1b versehen. Diese Prägung 1b vermeidet eine dortige Öffnung in dem Deckel 1a, durch die Staub in das Innere des Bremsgehäuses 1 gelangen könnte.

An seinem anderen Ende ist das Gewindeelement 121 mit einem Außengewindeabschnitt 121 a mit großer Steigung versehen. Das andere Gewindeelement 122 ist axial im Bremssattelgehäuse beweglich und bildet zugleich jene Druckplatte, mittels der die Bremskraft F bei der Zuspannung auf das Nachstellelement 110 übertragen wird. Zur Bildung einer Schraubverbindung wie der in Fig. 5a dargestellten Schraubverbindung 123 weist das weitere Gewindeelement 122 einen Innengewindeabschnitt 122a auf, in welchen der Außengewindeabschnitt 121a des Gewindeelements 121 greift. Die so gebildete Schraubverbindung 123 weist eine verglichen mit der Schraubverbindung 111 große Gewindesteigung auf. Darüber hinaus weist die Schraubverbindung 123 ein axiales Gewindespiel S3 (Fig. 5a) zwischen den so gebildeten zwei Anschlägen auf. Betragsmäßig entspricht das Gewindespiel S3 in etwa dem gewünschten Lüftspiel L.

Mit Einleitung eines Bremsvorgangs, d.h. bei einer Zuspannkraft F auf die Druckfläche 112 des Gewindeelements 122, bewegt sich dieses und das an ihm axial spielfrei anliegende Nachstellelement 110 unter Mitnahme der über die Schraubverbindung 111 an dem Nachstellelement 110 befestigten Druckstempel 2 in Richtung zu der Bremsscheibe hin. Dabei wird die Zuspannkraft F zunächst noch nicht auf das zentrale Gewindeelement 121 übertragen.

Eine Übertragung der Zuspannkraft auf das Gewindeelement 121 erfolgt vielmehr erst nach Überwindung des Lüftspiels S3 (Fig. 5a), sobald nämlich die Innen- und Außengewinde 121a, 122a der Gewindeelemente 122, 121 mit ihren Gewindeflanken aneinander zur Anlage gelangen. Die Gewindeflanken 150, 151 des axial nicht beweglichen Gewindeelements 121 bilden hierbei die Endanschläge für das axial bewegliche Gewindeelement 122, zwischen denen es gegenüber dem Gewindeelement 121 axial hin und her bewegt werden kann, ohne eine Drehbewegung des Gewindeelements 121 zu bewirken. Aufgrund der relativ steilen Gewindeverbindung 123 zwischen dem axial beweglichen Gewindeelement 122 und dem axial unbeweglichen Gewindeelement 121 beginnt sich das Gewindeelement 121 unter der Wirkung der Zuspannkraft zu drehen, sobald das Gewindeelement 122 den einen Endanschlag, d.h. die Gewindeflanke 151 des Gewindeelements 121, erreicht hat.

Die so dem Gewindeelement 121 aufgezwungene Drehbewegung entspricht dem Bremsverschleiß und wird in der einen Richtung über die Einwegkupplung 138 auf die Innenhülse 126 übertragen, d.h. die Innenhülse 126 folgt in der einen Drehrichtung der Drehung des Gewindeelements 121. In der umgekehrten Drehrichtung hingegen arbeitet die Einwegkupplung nicht, das Gewindeelement 121 dreht gegenüber der Innenhülse 126 frei durch. Als Einwegkupplung 138 kann zum Beispiel ein Freilauf oder auch eine Schlingfeder dienen.

Alternativ kann die Einwegkupplung / der Freilauf im Weg bzw. Kraftfluß zwischen der Außenhülse 125 und der Innenhülse 126 angeordnet sein.

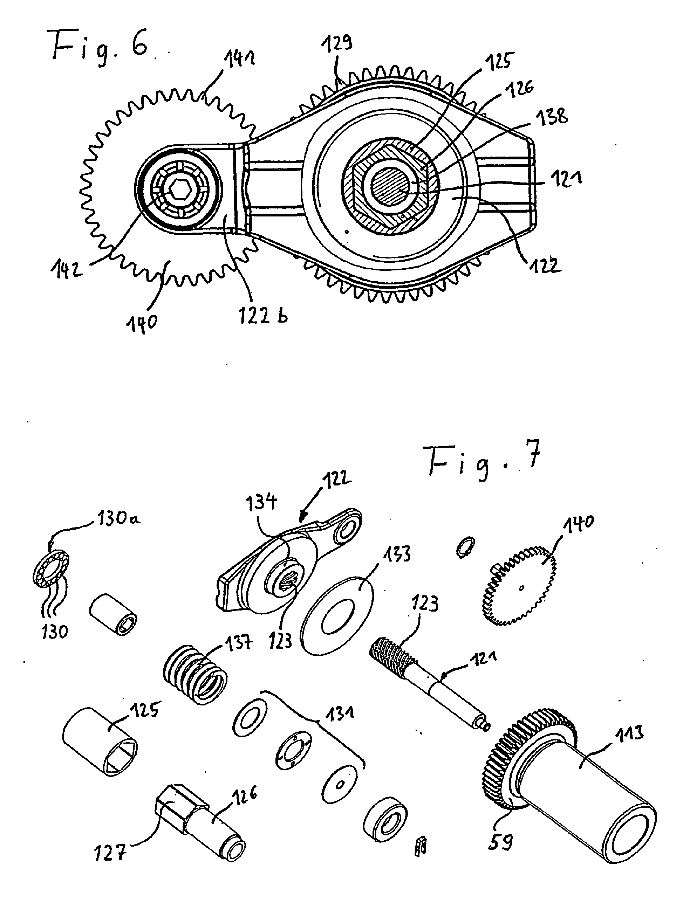

Über einen Dreh-Formschluß in Gestalt einer Mehrkantführung 127 ist die Innenhülse 126 so innerhalb einer kürzeren Außenhülse 125 geführt, dass sich Außen- und Innenhülse 125, 126 stets gemeinsam drehen, wohingegen Axialverschiebungen zwischen beiden Hülsen 125, 126 möglich sind. Die Mehrkantführung 127 ist hier eine Sechskantführung, die an der Außenseite der Innenhülse 126 sowie entsprechend auch der Innenseite der Außenhülse 125 angeformt ist, vgl. hierzu Fign. 6 und 7.

Die durch eine Feder 137 axial druckbelastete Außenhülse 125 ist im Querschnitt in etwa topfförmig, wobei der der Druckfeder 137 abgewandte Boden des Topfes eine zentrale Öffnung zur Durchführung des Gewindeelements 121 aufweist. Stirnseitig ist der Boden der Außenhülse 125 mit einer Vielzahl über seinen Umfang verteilter Ausnehmungen 132 versehen, die gemeinsam mit gegenüberliegenden Ausnehmungen 132, die sich an dem Nachstellelement 110 befinden, Lagerschalen für darin liegende Kugelkörper 130 bilden. Die Kugelkörper 130 sind in einem gemeinsamen Kugelkäfig 130a (Fig. 7) zusammengefaßt.

Von der anderen Seite her wird die Außenhülse 125 über die Druckfeder 137 mit einer Federkraft beaufschlagt, welche die Kugelkörper 130 normalerweise innerhalb ihrer Lagerschalen 132 hält. Die Druckfeder 137 ist an ihrem der Außenhülse 125 abgewandten Ende über ein reibungsarm arbeitendes Wälzlager 131 axial abgestützt. Auf diese Weise ist die Feder 137 gemeinsam mit den Kugelkörpern 130 Bestandteil einer Drehmomentkupplung 139, die das Nachstellelement 110 drehmomentabhängig mit der Außenhülse 125 und somit letztlich mit dem Gewindeelement 121 koppelt. Dabei werden die Drehbewegungen des Gewindeelementes 121 und der Außenhülse 125 nur bis zu einem bestimmten Drehmoment-Grenzwert, der von der Federkonstanten der Druckfeder 137 und der Tiefe der Ausnehmungen 132 für die Kugeln abhängt, auf das Gehäuse 113 des Nachstellelements 110 übertragen, wodurch das Joch 2a über die Schraubverbindung 111 in Richtung der Bremsscheibe nachgestellt wird. Übersteigt das Drehmoment an der Drehmomentkupplung 139 den Grenzwert, z.B. wenn die Bremsbeläge in Anlage an die Bremsscheibe gelangen, so verlassen die Kugeln 130 ihre Ausnehmungen 132, die Druckfeder 137 wird gestaucht, und die Außenhülse 125 verdreht sich gegenüber dem Gehäuse 113. Dies hat zur Folge, dass die Drehbewegung des Gewindeelements 121 nicht auf das Nachstellelement 110 übertragen wird. Die Federkonstante der Druckfeder 137 sowie die Arbeitscharakteristik der Überlast- bzw. Drehmomentkupplung 139 ist so gewählt, dass diese immer dann durchrutscht, wenn die Druckstempel so weit zugestellt sind, dass die Bremsbeläge an der Bremsscheibe anliegen.

Nach Beendigung des Bremsvorgangs, d.h. bei Wegfall der Kraft F, wird das Gewindeelement 122 über die Druckfeder 137 gemeinsam mit dem Nachstellelement 110 in die Ausgangslage gegen den zweiten Endanschlag zurück bewegt.

Mit zunehmendem Verschleiß der Bremsbeläge wird die Traverse 2a durch Drehen des Nachstellelements 110 über die Schraubverbindung 111 sukzessive in Richtung der Bremsscheibe bewegt. Bei einem Bremsbelagwechsel ist es daher erforderlich, die Nachstelleinrichtung wieder in ihre Ausgangsstellung zurückzustellen. Um dem Monteur die Rückstellung zu erleichtern, ist das Nachstellelement 110 mit einer äußeren Verzahnung 129 versehen, die mit einer Außenverzahnung 141 eines Zahnrads 140 kämmt, das in einer Öffnung einer seitlichen Erweiterung des Gewindeelements 122 um eine Drehachse D drehbar gelagert ist. Das Zahnrad 140 ist für den Monteur von außerhalb des Bremsgehäuses gut zugänglich.

Wie Fig. 6 dies erkennen lässt, ist das Zahnrad 140 mit Eingriffsmitteln 142 für ein Montagewerkzeug, beispielsweise einen Sechskant o.ä. Standart Werkzeug, versehen. Durch Verdrehen des Zahnrades 140 wird das Nachstellelement 110 in Drehung versetzt, wodurch es sich über die Schraubverbindung 111 wieder tiefer in das Joch 2a hinein dreht, so dass die Traverse bzw. das Joch 2a in die Ausgangsstellung gelangt, in welcher der Abstand zwischen Druckstempeln und Bremsscheibe maximal ist. Hierbei muß die Drehmomentkupplung 139 überwunden werden, was durch das Überrutschen der Kugeln 130 gut hörbar ist.

Zur Reduktion der bei der Relativdrehung auftretenden Reibung zwischen der Druckfläche an dem Gewindeelement 122 und der korrespondierenden Gegendruckfläche an dem Nachstellelement 110 ist zwischen beiden Bauteilen eine scheibenförmige Gleitlagerung 133 eingesetzt. Zwecks besserer Zentrierung des Druckelements zu dem Nachstellelement 110 greift ein zylindrischer Zentrieransatz 134 der das Druckelement bildenden Druckplatte 122 in eine entsprechende runde Ausnehmung in dem Nachstellelement 110.

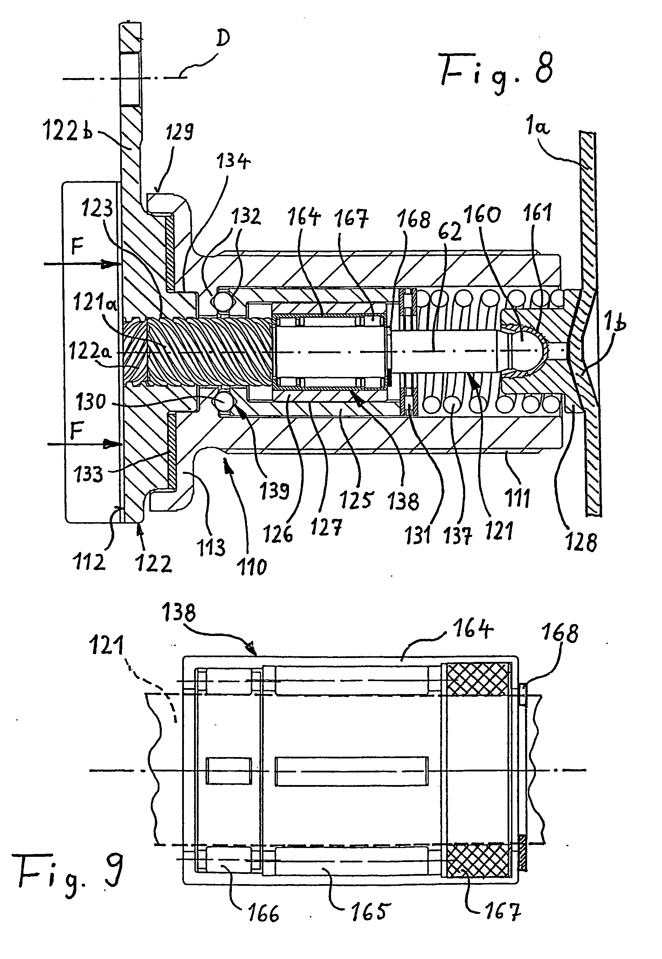

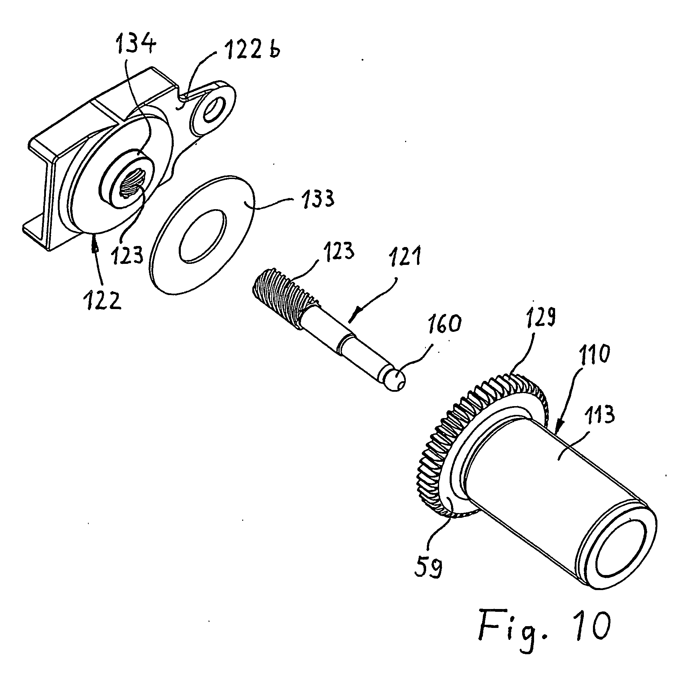

Eine weitere Ausführungsform ist in den Fign. 8 bis 10 dargestellt. Diese Ausführungsform entspricht in ihrem Grundaufbau jener der Fign. 4 bis 7, jedoch bestehen einige konstruktive Unterschiede, und nur auf diese wird im folgenden eingegangen. Die Bezifferung der einzelnen Bauteile entspricht, soweit sie die gleiche Funktion ausüben, der vorangegangenen Ausführungsform nach den Fign. 4 bis 7.

Bei der Ausführungsform nach den Fign. 8 bis 10 ist zunächst die Anordnung der Druckfeder 137 und des axial wirkenden Wälzlagers 131 vertauscht. Das Wälzlager 131 stützt sich gegen die äußere Hülse 125 ab, wohingegen sich die Druckfeder 137 unmittelbar gegen das Bremssattelteil 128 abstützt. Anders als bei der vorangegangenen Ausführungsform dreht die Feder 137 daher nicht mit.

Ein weiterer Unterschied besteht in der Abstützung des zentral angeordneten, bolzenförmigen Gewindeelementes 121. Dieses endet an seinem dem Deckel 1a des Bremsgehäuses zugewandten Ende in einem Kugelzapfen 160. Der Kugelzapfen 160 sitzt in einer aus Kunststoff bestehenden Kugelpfanne 161. Die Kugelpfanne 161 sitzt fest in dem Bremssattelteil 128. Um diesen festen Sitz zu erreichen, kann die Kugelpfanne 161 mit einer Außenverrippung versehen sein, welche formschlüssig in einer entsprechend gestalteten Nut des Bremssattelteils 128 sitzt. Die Zeichnung lässt erkennen, dass die Kugelpfanne 161 den Kugelzapfen 160 des Gewindeelementes 121 auf einem Kugelabschnitt von mehr als 180° umschließt. Vorzugsweise beträgt der Umschließungsgrad 200° bis 210°. Auf diese Weise ist der Kugelzapfen 160 gegen ein axiales Herausziehen aus der Kugelpfanne 161 gesichert, gleichzeitig lässt sich der Kugelzapfen 160 in der Kugelpfanne 161 drehen. Diese Drehung erfolgt mit einem gewissen Reibmoment, dessen Stärke von der Materialpaarung Kugelzapfen/Kugelpfanne abhängt. Die Größe dieser Reibung und damit ein geringer Widerstand beim Drehen des zentralen Gewindeelementes 121 um seine Längsachse ist genau toleriert.

Eine weitere Besonderheit der Ausführungsform nach den Fign. 8 bis 10 ist die im Vergleich zu der vorangegangenen Ausführungsform verkürzte Gestaltung der über die Mehrkantführung 127 in der äußeren Hülse 125 geführten inneren Hülse 126. Die innere Hülse 126 ist nur so lang, wie die Einwegkupplung 138. Die Hülse 126 ist ferner mit dem Gehäuse 164 der Einwegkupplung 138 drehfest verbunden, z.B. durch einen leichten Presssitz.

Die Fig. 9 zeigt Einzelheiten der hier verwendeten Einwegkupplung 138. Deren durch einen Sicherungsring 168 axial gesichertes Gehäuse 164 umschließt drei Längssektionen. In der mittleren Sektion befinden sich die Sperrkörper 165 der Einwegkupplung. In der linken Sektion befinden sich mehrere Wälzkörper 166, die in diesem Bereich das Gewindeelement 121 nahezu reibungsfrei lagern, ohne in eine der beiden Drehrichtungen eine Sperrwirkung zu erzeugen. Die in Fig. 9 rechte Längssektion nimmt einen Reibring 167 auf. Dieser erzeugt eine geringe, jedoch genau reproduzierbare Reibung zwischen der Einwegkupplung und dem zentralen Gewindeelement 121. Zu diesem Zweck besteht der Reibring 167 vorzugsweise aus Kunststoff. Diese geringe, jedoch genau reproduzierbare Reibung trägt entscheidend zu einer präzisen Nachstellung des Nachstellelementes bei. Verhindert wird, dass die im Betrieb der Fahrzeugbremse eintretenden Rüttelbewegungen die Elemente der Nachstelleinrichtung beeinflussen können.

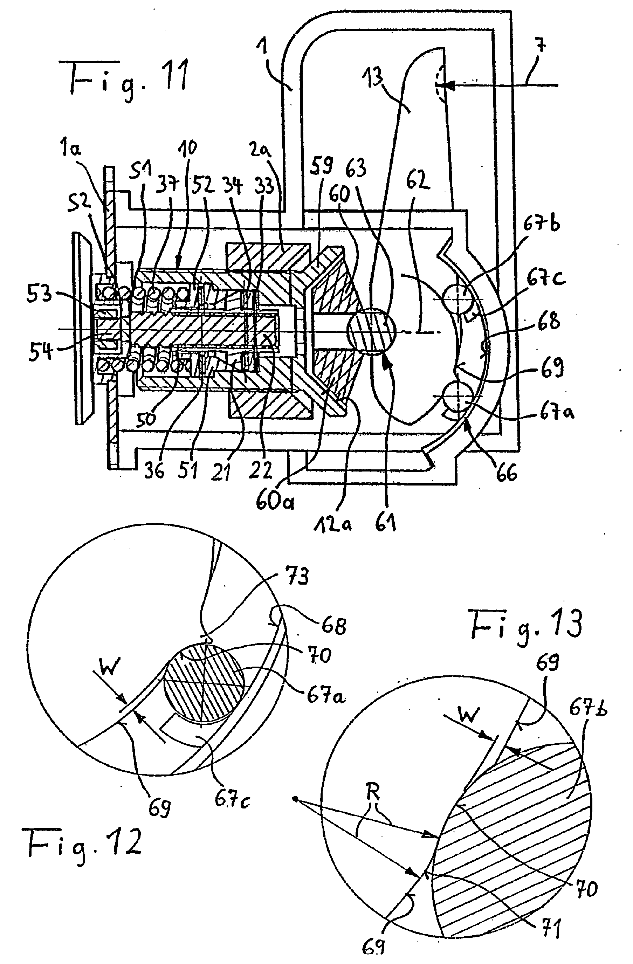

Eine weitere Ausführungsform ist in Figur 11 dargestellt. Diese ist sehr ähnlich der Ausführungsform nach Figur 2 bzw. nach Figuren 3a bis 3e aufgebaut, jedoch bietet sie konstruktive und herstellungstechnische Vorteile. Auf dem Gewindeelement 22, welches hier wiederum in seiner axialen Bewegung durch die Axialspalte S1 und S2 begrenzt ist, sitzt eine relativ lang gestaltete Hülse 50, welche auf diese Weise auch ein besonders lang gestaltetes Gegengewinde der Verschraubung mit großer Steigung aufnimmt. Mit der Hülse 50 starr verbunden ist dann das Gewindeelement 21. Die Hülse 50 des Gewindeelements 21 ermöglicht ein besonders reibungs- und verkantungsarmes Drehen des äußeren Gewindeelements 21 auf dem inneren Gewindeelement 22.

Anders als bei Figur 2 ist bei Figur 11 auch die Anordnung der Druckfläche 30 des äußeren Gewindeelements 21 und der Gegendruckfläche 31 des Nachstellelements 10. Die Gegendruckfläche 31 befindet sich auch hier nicht einstückig am Nachstellelement 10, sondern an einem ringförmigen, mit einer Stufe versehenen Einsatz 51. Der Einsatz 51 stützt sich axial an einer Stufe ab, mit der die Innenwandung des Nachstellelements 10 versehen ist. Der Einsatz 51 ist zudem ausreichend drehfest in dem Nachstellelement 10 angeordnet. Während der Einsatz 51 des Nachstellelements 10, der Bremsscheibe abgewandt, die Gegendruckfläche 31 aufweist, ist der Einsatz 51 der Bremsscheibe zugewandt mit einer Stirnfläche 52 versehen, an welcher sich das Axiallager 36 abstützt. Am Axiallager 36 wiederum stützt sich ein Winkelring 52 ab, welcher die Basis der Druckfeder 37 aufnimmt. Durch seine Gestalt als Winkelring mit einem daran angeformten zylindrischen Abschnitt vermag der Ring 52 die Druckfeder 37 zu zentrieren, so dass diese nicht verkanten oder verrutschen kann. Die Druckfeder 37 fixiert axial die Teile Einsatz 51, Axiallager 36 und Winkelring 52.

Zur konstruktiven Vereinfachung der Nachstellung trägt ferner bei, dass die Einstellung der wichtigen Axialspalte S1 und S2 mittels einer Mutter 53 erfolgt, die auf einen Gewindezapfen 54 am Ende des inneren Gewindeelements 22 aufgeschraubt und dort in entsprechender Lage drehfest gesichert ist. Die Unterseite der Mutter 53 stellt hierbei den zweiten Endanschlag 29 dar.

Gemäß Figur 11 bildet das Nachstellelement 10 an seinem der Zuspanneinrichtung zugewandten Ende das Druckelement 59 mit der daran ausgebildeten Gegendruckfläche 12a. Die Gegendruckfläche 12a ist hier, bezogen auf die Mittellinie 62 der Nachstellung, konisch gestaltet. An der Gegendruckfläche 12a des Nachstellelements 10 liegt die korrespondierend gestaltete Duckfläche 60a des Druckelements 60 an, welches seinerseits über das Gelenk 61 drehbeweglich mit dem Zuspannhebel 13 der Zuspanneinrichtung verbunden ist. Die Druckfläche 60a des Druckelements 60 ist hier konisch, und ebenso die konische Gegendruckfläche 12a des zweiten Druckelements 59.

Vor allem sind beide Druckflächen 60a, 12a koaxial zur Mittellinie 62 der Nachstelleinrichtung und bilden auf diese Weise ein axiales Gleit- und Drucklager. Dies hat den großen Vorteil, dass das am Nachstellelement 10 angeformte Druckelement 59 relativ zu dem Druckelement 60 um die Mittellinie 62 drehbar ist. Ferner können sich die Teile gegenseitig zentrieren, sobald Druckkräfte übertragen werden. Von ebenso großem Vorteil ist, dass sich die hier konisch gestalteten. Flächen 12a, 60a beim Zurückziehen des Zuspannhebels 13 auch wieder sicher voneinander trennen, so dass nach einer solchen Trennung keine Reibung mehr von dem Druckelement 60 auf das hierzu drehbare Nachstellelement 10 ausgeübt wird. Dies ist von großem Wert vor allem im Rahmen der oben im einzelnen erläuterten Nachstellung, die eine möglichst reibungsarme Verdrehbarkeit des Nachstellelements 10 voraussetzt.

Das ein- oder mehrteilig gestaltete Gelenk 61 verbindet das Druckelement 60 auf Druck und vorzugsweise auch auf Zug mit dem Zuspannhebel 13. Es befindet sich auf der Mittellinie 62 der Nachstelleinrichtung, und seine Achse schneidet die Mittellinie 62 in einem Rechten Winkel. Das Gelenk 61 setzt sich unter anderem aus einem runden Gelenkkörper 63 sowie zwei Halbschalen zusammen. Die eine Halbschale befindet sich in jenem Körper, an dem die Druckfläche 60a ausgebildet ist, wohingegen die andere Halbschale an dem Zuspannhebel 13 ausgebildet ist.

In Verlängerung des Gelenks 61 ist der Zuspannhebel 13 über die Lagerung 66 gegen das Bremsgehäuse 1 abgestützt. Bei dem dargestellten Ausführungsbeispiel setzt sich die Lagerung 66 aus vorzugsweise zylindrischen Wälzkörpern 67a, 67b zusammen. Die Wälzkörper 67a, 67b rollen bzw. wälzen zwischen einer ersten Wälzbahn 68 in Form einer kreisförmig gekrümmten Lagermulde des Bremsgehäuses 1, und einer zweiten Wälzbahn 69 an dem Zuspannhebel 13. Der Weg der Wälzkörper ist durch einen Anschlag 67c begrenzt.

Die als Lagermulde gestaltete äußere Wälzbahn 68 weist die Krümmung eines Kreissegments auf. Die Kontur der Wälzbahn 69 des Zuspannhebels 13 ist hingegen als Evolvente gestaltet, wobei der Bezugsort dieser Evolvente auf der Mittelachse des Gelenks 61 liegt. Wird daher der Zuspannhebel 13 mittels z.B. eines Bremszylinders verschwenkt, so laufen die Wälzkörper 67a, 67b an der evolventenförmigen Kontur der Wälzbahn 69 ab, wodurch auf das Gelenk 61 eine Bewegung fast ausschließlich längs der Mittellinie 62 ausgeübt wird mit der Folge, dass die Bremse ohne Schwenkbewegung des Druckstempels 2 zustellt.

Die Figur 12 zeigt hierzu als Ausschnitt aus Fig. 11 die an dem Zuspannhebel 13 ausgebildete evolventenförmige Wälzbahn 69 mit dem Wälzkörper 67a, und Figur 13 zeigt einen nochmals vergrößerten Ausschnitt aus Figur 11 für den anderen Wälzkörper 67b. Beide Darstellungen zeigen zudem die Wälzkörper 67a, 67b und die Wälzbahn 69 bei nicht verschwenktem Zuspannhebel 13 und damit in jener Situation, in welcher der Zuspannhebel 13 seine unbetätigte, d.h. druckkraftfreie Neutralstellung einnimmt. Die innere Wälzbahn 69 ist mit einer Einsenkung oder Vertiefung 70 nach Art einer Mulde versehen. Gegenüber dem übrigen Niveau der Wälzbahn ist die Vertiefung um den in den Figuren 12 und 13 dargestellten Betrag W abgesenkt. Der Übergang von der muldenartigen Vertiefung 70 zu der normalen Kontur der Wälzbahn, an dem die Wälzkörper 67a, 67b während der Zustellung entlang wandern, ist als Rundung 71 gestaltet. Die Rundung 71 kann z.B. einen Rundungsradius R aufweisen.

Figur 12 lässt für einen der beiden Wälzkörper erkennen, dass die Endposition dieses Wälzkörpers 67a, die dieser im Fall der Nicht-Zustellung einnimmt, durch einen Begrenzungsnocken 73 definiert wird, welcher die Vertiefung 70 an ihrem anderen, der Rundung 71 abgewandten Ende begrenzt, und welcher deutlich über die normale Kontur der Wälzbahn 69 vorsteht. Der Begrenzungsnocken 73 bildet auf diese Weise einen definierten Endanschlag für den betreffenden Wälzkörper 67a.

Bei Zustellung der Bremse führt die Schwenkbewegung des Zuspannhebels 13 dazu, dass sich der Wälzkörper 67a ebenso wie der andere Wälzkörper 67b zunächst aus seiner Vertiefung 70 herauswälzt. Dies führt wegen der Tiefe W der Vertiefung 70 zu einer sofortigen Zustellung. Mit anderen Worten: bereits eine geringe Anfangsauslenkung des Zuspannhebels 13 bei A führt zu einer relativ großen ersten Zustellung. Die relativ große Anfangszustellung infolge der Vertiefungen 70 in der Kontur der Wälzbahn bietet große praktische Vorteile. Denn zu Beginn der Zustellung sind noch keine Bremskräfte zu überwinden, vielmehr ist in diesem Stadium nur die innere Reibung der beteiligten Komponenten, die Rückstellkraft der Druckfeder 37, sowie ggf. die Nachstellung kräftemäßig zu überwinden. Es ist daher von Vorteil, für diesen ersten Zustellweg zum Überwinden des Lüftspiels L mit großem Reaktionsweg bei relativ kleiner Schwenkbewegung des Zuspannhebels 13 zu arbeiten. Zudem haben die heute für die Bremszustellung verwendeten pneumatischen Bremszylinder eine degressive Arbeitscharakteristik bei Erreichen ihres maximalen Kolbenhubs, der durch die aufgezeigten Maßnahmen gar nicht erst erreicht wird. Der ausgenutzte Arbeitsbereich des Kolbenhubs wird daher vorteilhaft mehr in Richtung der Grundstellung des Kolbens verschoben.

### Bezugszeichenliste:

- 1: Bremsgehäuse
- 1a: Deckel
- 1b: Prägung im Deckel
- 2: Druckstempel
- 2a: Joch
- 3: Belagplatte
- 4: Bremsbelag
- 5: Reibbelag
- 6: Bremsscheibe
- 7: Betätigungsstange des Bremszylinders
- 10: Nachstellelement
- 11: Schraubverbindung
- 12: Druckfläche
- 12a: Gegendruckfläche
- 13: Zuspannhebel
- 14: Kulisse
- 15: Flachlager
- 21: Gewindeelement (Gewindemutter)
- 21a: Gewindeelement
- 21 b: Gewindeelement
- 22: Gewindeelement (Gewindespindel)
- 23: Verschraubung
- 24: Zylindrischer Abschnitt
- 25: Bohrung
- 27: Vierkant
- 28: 1. Endanschlag
- 29: 2. Endanschlag
- 30: Druckfläche
- 31: Gegendruckfläche
- 33: Druckfeder
- 34: Axiallager
- 35: Axiallager
- 36: Axiallager
- 37: Druckfeder
- 38: Rutschkupplung
- 39: Druckkupplung
- 40a: Nut
- 40b: Nut
- 41: Sprengring
- 41b: Nut
- 42: Stift
- 43: Druckfeder
- 50: Hülse
- 51: Einsatz
- 52: Winkelring
- 53: Mutter
- 54: Gewindezapfen
- 59: Druckelement
- 60: Druckelement
- 60a: Druckfläche
- 61: Gelenk
- 62: Mittellinie
- 63: Gelenkkörper
- 66: gehäusefeste Lagerung
- 67a: Wälzkörper
- 67b: Wälzkörper
- 67c: Anschlag
- 68: Wälzbahn
- 69: Wälzbahn
- 70: Vertiefung
- 71: Rundung
- 73: Begrenzungsnocken
- 110: Nachstellelement
- 111: Schraubverbindung
- 112: Druckfläche
- 113: Gehäuse
- 121: Gewindeelement
- 121a: Gewindeabschnitt
- 122: Gewindeelement
- 122a: Gewindeabschnitt
- 122b: seitliche Erweiterung
- 123: Verschraubung

- 124: zylindrischer Abschnitt
- 125: Hülse, Außenhülse
- 126: Hülse, Innenhülse
- 127: Mehrkantführung
- 128: Bremssattelteil
- 129: Verzahnung
- 130: Kugelkörper
- 130a: Kugelkäfig
- 131: Axiallager
- 132: Ausnehmung
- 133: Gleitlager
- 134: Zentrieransatz
- 137: Druckfeder
- 138: Einwegkupplung
- 139: Drehmomentkupplung
- 140: Zahnrad
- 141: Verzahnung
- 142: Eingriffsmittel
- 150: Endanschlag, Gewindeflanke
- 151: Endanschlag, Gewindeflanke
- 160: Kugelzapfen
- 161: Kugelpfanne
- 164: Gehäuse der Einwegkupplung
- 165: Sperrkörper
- 166: Wälzkörper
- 167: Reibring
- 168: Sicherungsring

- A: freies Hebelende
- B: Bereich
- D: Drehachse
- F: Zuspannkraft
- L: Lüftspiel
- R: Rundungsradius
- S1: 1. Axialspalt
- S2: 2. Axialspalt
- S3: Axialspalt, Gewindespiel

- V: Verschleiß
- W: Absenkung

## Patentansprüche

1. Radbremse mit integrierter Nachstelleinrichtung, mit
einem in einem Bremsgehäuse (1) geführten und gegen einen Bremsbelag (4) arbeite ten Druckstempel (2),
einer Zuspanneinrichtung zum Betätigen des Druckstempels (2),
einem im Kraftfluß zwischen Zuspanneinrichtung und Druckstempel (2) innerhalb des Bremsgehäuses angeordneten Nachstellelement (10; 110), das in Schraubverbindung (11; 111) mit dem Druckstempel (2) steht,
einem verschwenkbaren Zuspannhebel (13) der Zuspanneinrichtung, der sich einerseits gegenüber dem Bremsgehäuse (1), und andererseits in Richtung zum Druckstempel (2) abstützt,
einer im Kraftfluß zwischen Zuspannhebel (13) und Druckstempel (2) angeordneten Druckübertragungseinrichtung, bestehend aus einem drehbeweglich zu dem Zuspannhebel (13) ausgebildeten und eine Druckfläche (60a) aufweisenden ersten Druckelement (60; 122), sowie einem zu dem ersten Druckelement (60; 122) drehbaren und eine Gegendruckfläche (12a) aufweisenden zweiten Druckelement (59; 133), **dadurch gekennzeichnet daß** der Druckstempel (2) ein Doppelstempel ist, dessen beiden Einzelstempel über ein Joch (2a) starr miteinander verbunden sind,
und sich in der Mitte des Jochs (2a) die Schraubverbindung (11; 111) mit dem Nachstellelement (10; 110) befindet.

2. Radbremse nach Anspruch 1, **dadurch gekennzeichnet, dass** das zweite Druckelement (59; 133) an dem Nachstellelement (11; 110) angeformt ist.

3. Radbremse nach Anspruch 1 oder Anspruch 2, **dadurch gekennzeichnet, dass** sich die Druckfläche des ersten Druckelements (60; 122) über ein Gleitlager (133) gegen die Gegendruckfläche des zweiten Druckelements (59; 133) abstützt.

4. Radbremse nach Anspruch 3, **gekennzeichnet durch** eine flache Scheibe (133) als Gleitlager.

5. Radbremse nach Anspruch 4, **dadurch gekennzeichnet, dass** die Scheibe (133) eine Lochscheibe ist, und auf einem Zentrieransatz (134) des Druckelements (60; 122) zentriert ist.

6. Radbremse nach einem der vorangehenden Ansprüche, **dadurch gekennzeichnet, dass** das Nachstellelement (110) mit einer Verzahnung (129) versehen ist.

7. Radbremse nach Anspruch 6, **dadurch gekennzeichnet, dass** die Verzahnung (129) mit der Verzahnung (141) eines neben dem Nachstellelement (110) angeordneten Zahnrades (140) kämmt.

8. Radbremse nach Anspruch 7, **dadurch gekennzeichnet, dass** das Zahnrad (140) mit Eingriffsmitteln (142) zur Rückstellung des Nachstellelementes (110) versehen ist.

9. Radbremse nach Anspruch 7, **dadurch gekennzeichnet, dass** das Zahnrad (140) an einer seitlichen Erweiterung (122b) des ersten Druckelements (122) drehbar gelagert ist.

## Claims

1. Wheel brake with an integrated adjusting device, comprising
a pressure plunger (2) which is guided in a brake housing (1) and is operated against a brake lining (4),
a brake application device for actuating the pressure plunger (2),
an adjusting element (10; 110) which is arranged in the force flow between the brake application device and the pressure plunger (2) within the brake housing and which is connected to the pressure plunger (2) by a screw connection (11; 111),
a pivotable brake application lever (13) of the brake application device, which is supported at one side against the brake housing (1) and at the other side in the direction of the pressure plunger (2),
a pressure transmitting device which is arranged in the force flow between the brake application lever (13) and the pressure plunger (2), said pressure transmitting device consisting of a first pressure element (60; 122), which is designed such that it can rotate with respect to the brake application lever and has a pressure surface (60a), and a second pressure element (59; 133) which can rotate with respect to the first pressure element (60; 122) and has a counterpressure surface (12a),
**characterised in that**
the pressure plunger (2) is a double plunger, the two individual plungers of which are rigidly connected to one another via a yoke (2a),
and the screw connection (11; 111) to the adjusting element (10; 110) is located in the centre of the yoke (2a).

2. Wheel brake according to claim 1, **characterised in that** the second pressure element (59; 133) is integrally formed on the adjusting element (11; 110).

3. Wheel brake according to claim 1 or claim 2, **characterised in that** the pressure surface of the first pressure element (60; 122) is supported against the counterpressure surface of the second pressure element (59; 133) via a sliding bearing (133).

4. Wheel brake according to claim 3, **characterised by** a flat disc (133) as the sliding bearing.

5. Wheel brake according to claim 4, **characterised in that** the disc (133) is a perforated disc and is centred on a centring protrusion (134) of the pressure element (60; 122).

6. Wheel brake according to one of the preceding claims, **characterised in that** the adjusting element (110) is provided with a toothing (129).

7. Wheel brake according to claim 6, **characterised in that** the toothing (129) meshes with the toothing (141) of a toothed wheel (140) arranged next to the adjusting element (110).

8. Wheel brake according to claim 7, **characterised in that** the toothed wheel (140) is provided with engagement means (142) for resetting the adjusting element (110).

9. Wheel brake according to claim 7, **characterised in that** the toothed wheel (140) is rotatably mounted on a lateral extension (122b) of the first pressure element (122).

## Revendications

1. Frein sur roue avec dispositif d'ajustage intégré, comprenant
un piston-chasse (2) guidé dans un boîtier de frein (1) et agissant contre une garniture de frein (4),
un dispositif d'application du frein pour actionner le piston-chasse (2),
un élément d'ajustage (10 ; 110) disposé dans la chaîne cinématique entre le dispositif d'application du frein et le piston-chasse (2) à l'intérieur du boîtier de frein et se trouvant en assemblage par vis (11 ; 111) avec le piston-chasse (2),
un levier d'application du frein pivotant (13) du dispositif d'application du frein qui prend appui d'une part en face du boîtier de frein (1) et d'autre part en direction du piston-chasse (2),
un dispositif de transmission de pression disposé dans la chaîne cinématique entre le levier d'application du frein (13) et le piston-chasse (2), composé d'un premier élément de pression (60 ; 122) réalisé de façon mobile en rotation par rapport au levier d'application du frein (13) et présentant une surface de pression (60a), ainsi que d'un deuxième élément de pression (59 ; 133) pouvant tourner par rapport au premier élément de pression (60 ; 122) et présentant une surface de contre-pression (12a),
**caractérisé en ce que** le piston-chasse (2) est un piston double dont les deux pistons individuels sont reliés ensemble rigidement par l'intermédiaire d'une entretoise (2a), et **en ce qu'**au milieu de l'entretoise (2a) se trouve l'assemblage par vis (11 ; 111) avec l'élément d'ajustage (10 ; 110).

2. Frein sur roue selon la revendication 1, **caractérisé en ce que** le deuxième élément de pression (59 ; 133) est rapporté à l'élément d'ajustage (11 ; 110).

3. Frein sur roue selon la revendication 1 ou 2, **caractérisé en ce que** la surface de pression du premier élément de pression (60 ; 122) prend appui par l'intermédiaire d'un palier lisse (133) contre la surface de contre-pression du deuxième élément de pression (59 ; 133).

4. Frein sur roue selon la revendication 3, **caractérisé par** un disque plat (133) en tant que palier lisse.

5. Frein sur roue selon la revendication 4, **caractérisé en ce que** le disque (133) est un disque ajouré et est centré sur un rebord de centrage (134) de l'élément de pression (60 ; 122).

6. Frein sur roue selon l'une quelconque des revendications précédentes, **caractérisé en ce que** l'élément d'ajustage (110) est muni d'une denture (129).

7. Frein sur roue selon la revendication 6, **caractérisé en ce que** la denture (129) s'engrène avec la denture (141) d'une roue dentée (140) disposée à côté de l'élément d'ajustage (110).

8. Frein sur roue selon la revendication 7, **caractérisé en ce que** la roue dentée (140) est munie de moyens de mise en prise (142) pour le rappel de l'élément d'ajustage (110).

9. Frein sur roue selon la revendication 7, **caractérisé en ce que** la roue dentée (140) est logée en rotation sur un élargissement latéral (122b) du premier élément de pression (122).
